# EUROPÄISCHE PATENTANMELDUNG

(11) **EP 0 899 159 A2**
(43) Veröffentlichungstag der Anmeldung: **03.03.1999**
(21) Anmeldenummer: 98116376.9
(22) Anmeldetag: 28.08.1998
(51) Int. Cl.: B60R 7/04

(54) **Deckel mit Zuziehgriff**

(30) Priorität: 29.08.1997 DE 19737742
(71) Anmelder: Volkswagen Aktiengesellschaft, 38436 Wolfsburg (DE)
(72) Erfinder: Westphal, Torsten, 29379 Wittingen (DE); Bendfeldt, Bernhard, 38162 Cremlingen (DE); Hofmann, Gustav, 38118 Braunschweig (DE)

(57) **Zusammenfassung**

Die Erfindung betrifft einen an einem Basiskörper (1) anlenkbaren Deckel (2), an dem ein als Zuziehgriff nutzbarer Wandungsrand eines Ablagefaches (5) angeordnet ist. Ein Abreißen des Ablagefaches (5) durch mißbäuchliche Benutzung des Wandungsrandes als Zuziehgriff wird dadurch unterbunden, daß der Wandungsrand als ein biegeelastisches Bauelement (14) ausgeführt wird, welches gegenüber dem Deckel (2) oder einem daran befestigten Verkleidungsteil (4) wegbegrenzt relativverschiebbar ist.

Die Erfindung ist besonders geeignet für Ablagefächer (5) an Fahrzeugtüren (2). Als bevorzugte Ausgestaltung für die Ablagefächer (5) werden aus Kunststoff geformte Mulden (6) angesehen, die von einem Textilnetz (7) überspannt werden.

## Beschreibung

Die Erfindung betrifft einen an einem Basiskörper anlenkbaren Deckel mit einem als Zuziehgriff nutzbaren Wandungsrand eines Ablagefaches.

Gattungsgemäße Deckel sind insbesondere in Gestalt von Fahrzeugtüren in unterschiedlichsten Ausführungsformen bekannt. Am häufigsten verbreitet sind derzeit bei Fahrzeugtüren Ablagefächer mit einer Kunststoffwandung, die entweder integraler Bestandteil einer Türinnenverkleidung ist oder über Verbindungselemente an dieser Türinnenverkleidung befestigt ist. Es hat sich in der Vergangenheit herausgestellt, daß Fahrzeuginsassen gelegentlich dazu neigen, den Wandungsrand dieses Ablagefaches als Zuziehgriff zu nutzen, obwohl oberhalb dieser Ablagefächer bei allen Fahrzeugen modemerer Bauart stets ein Türgriff vorgesehen ist. Diese mißbräuchliche Nutzung des Ablagefaches stellt für die Befestigung des Verkleidungsteiles bzw. der Ablageschale an dem Verkleidungsteil eine hohe Belastung dar, und zwar insbesondere dann, wenn bei weit geöffneter Tür diese ruckartig zugezogen wird. Bei stetiger Wiederholung dieser mißbräuchlichen Nutzung besteht somit die Gefahr, daß das Ablagefach und/oder das Verkleidungsteil von dem Deckel abgerissen wird.

Der Erfindung liegt die Aufgabe zugrunde, gattungsgemäße Deckel so weiterzubilden, daß die vorstehend beschriebene Abrißgefahr auf ein Minimum reduziert werden kann.

Diese Aufgabe wird gelöst mit einem Deckel gemäß Patentanspruch 1. Die darauf bezogenen Unteransprüche 2 bis 10 betreffen besonders zweckmäßige Weiterbildungen dieses Deckels. Die Ansprüche 11 bis 16 betreffen Ablagefachanordnungen, die bevorzugt für den Einsatz in erfindungsgemäße Deckel hergerichtet sind. Die Ansprüche 17 und 18 sind auf einen Zusammenbau aus einer Ablagefachanordnung gemäß den Ansprüchen 10 bis 15 und einen in dem Deckel gemäß den Ansprüchen 1 bis 9 einsetzbaren Verkleidungsteil gerichtet.

Erfindungsgemäß wird also bei gattungsgemäßen Deckeln der Wandungsrand als ein biegeelastisches und/oder längenveränderliches Bauelement - vorzugsweise nach Art eines Stabes, Blattes, Seiles oder dergleichen - ausgeführt, das an dem Deckel oder an einem an dem Deckel befestigten Verkleidungsteil über wenigstens eine Lagerkonstruktion gehalten ist, die eine wegbegrenzte Relativverschiebung des Bauelementes gegenüber dem Deckel und/oder dem Verkleidungsteil zuläßt. Durch diese Maßnahme wird erreicht, daß bei einer ruckartig auf den Wandungsrand eingebrachten Zugkraft ein Teil der Kraft zunächst für die Lage- und/oder Gestaltänderung des Bauelementes eingesetzt wird und der verbleibende Teil für die Bewegung des an dem Basiskörper angelenkten Deckels zur Verfügung steht. Die mit der Relativverschiebung des Bauelementes gegenüber dem Deckel bzw. dem Verkleidungsteil einhergehenden Dämpfung bewirkt somit den gezielten Abbau von Kraftspitzen und vermindert so erheblich die Abrißgefahr für das Ablagefach. Durch die Wegbegrenzung des Wandungsrandes wird erreicht, daß die maximale Ausdehnbarkeit und damit das Befüllungsvolumen des Ablagefaches auf ein vorgegebenes Maß beschränkbar ist. Dies ist insbesondere dann wichtig, wenn bei geschlossener Fahrzeugtür zwischen der Türinnenverkleidung und einem daneben befindlichen Fahrzeugsitz ein begrenztes Platzangebot zur Verfügung steht. Die Wegbegrenzung sorgt also dafür, daß bei geöffneter Fahrzeugtür das Ablagefach nicht so weit ins Fahrzeuginnere hinein gedehnt wird, daß entweder das Schließen der Tür beeinträchtigt ist oder aber beim Schließen der Tür die in dem Ablagefach untergebrachten Gegenstände bzw. der Fahrzeugsitz beschädigt oder verschmutzt werden.

Die Erfindung ist insbesondere auf Fahrzeugtüren anwendbar, bei denen das Ablagefach aus einer Mulde in dem Verkleidungsteil gebildet ist, die von einem elastischen Netz überspannt wird. Das bevorzugt stab- oder blattförmige ausgeführte Bauelement ist dann gleichzeitig zur Befestigung des Netzes hergerichet.

Unter haptischen und optischen Gesichtspunkten besonders vorteilhaft sind stabförmige Bauelemente, deren Querschnitt flachbandförmig ausgebildet ist. Mit einer solchen Ausführung kann ein relativ breiter Netzrand realisiert werden, der gut in der Hand liegt und stilistisch gut in das Verkleidungselement eingebunden werden kann. Besondere Beachtung verdient auch die Ablagefachanordnung gemäß Anspruch 11. Diese ist so gestaltet, daß sie als vormontierbares Modul getrennt von dem Deckel und/oder dem Verkleidungsteil vormontierbar ist. Mit einer derartigen Konzeption können auch bereits in der Serienproduktion befindliche Verkleidungsteile ohne großen Aufwand an die Erfindung angepaßt werden. Eine lösbare Befestigung dieser Ablagefachanordnung ermöglicht im Reparaturfalle sogar eine leichte Austauschbarkeit.

Die gemäß den Ansprüchen 17 und 18 ausgeführten Zusammenbauten zeichnen sich besonders dadurch aus, daß die gemäß Anspruch 11 als eigenständiges Modul ausgeführte Ablagefachanordnung äußerlich als getrennte Baugruppe kaum wahrnehmbar ist. Für den Fahrzeuginsassen entsteht der Eindruck, daß der zum Ablagefach gehörende Muldenkörper und die übrigen Wandungen des Verkleidungselementes einteilig sind. Die Ablagefachanordnung fügt sich optisch also harmonisch in die gesamte Türinnenverkleidung ein.

Fahrzeugtüren sind der bevorzugte Anwendungsfall für die Erfindung. Es wird hier jedoch ausdrücklich darauf hingewiesen, daß die Erfindung prinzipiell auch an Schranktüren oder Fensterkonstruktionen realisiert werden kann.

Ein vorteilhaftes Ausführungsbeispiel der Erfindung ist in der Zeichnung dargestellt. Es zeigt
- Figur 1:: in einer Explosionsdarstellung einen Deckel mit erfindungswesentlichen Bauteilen,
- Figur 2:: eine in dem Deckel gemäß Figur 1 verbaubare Ablagefachanordnung und
- Figur 3:: eine Ansicht gemäß Schnitt III-III in Figur 2.

In allen Figuren weisen gleiche Bauteile bzw. Bauteilabschnitte die gleiche Bezifferung auf.

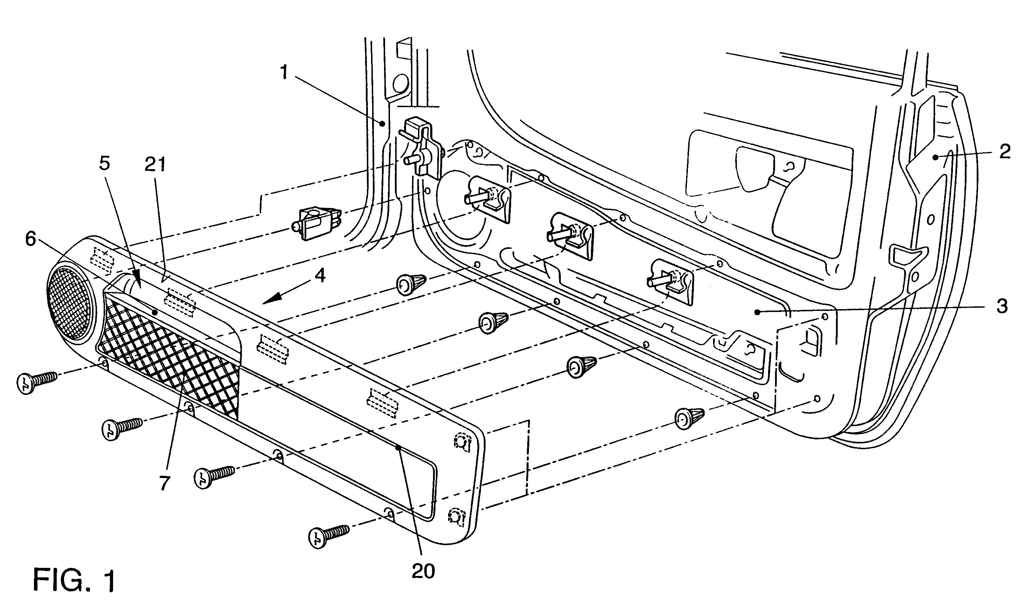

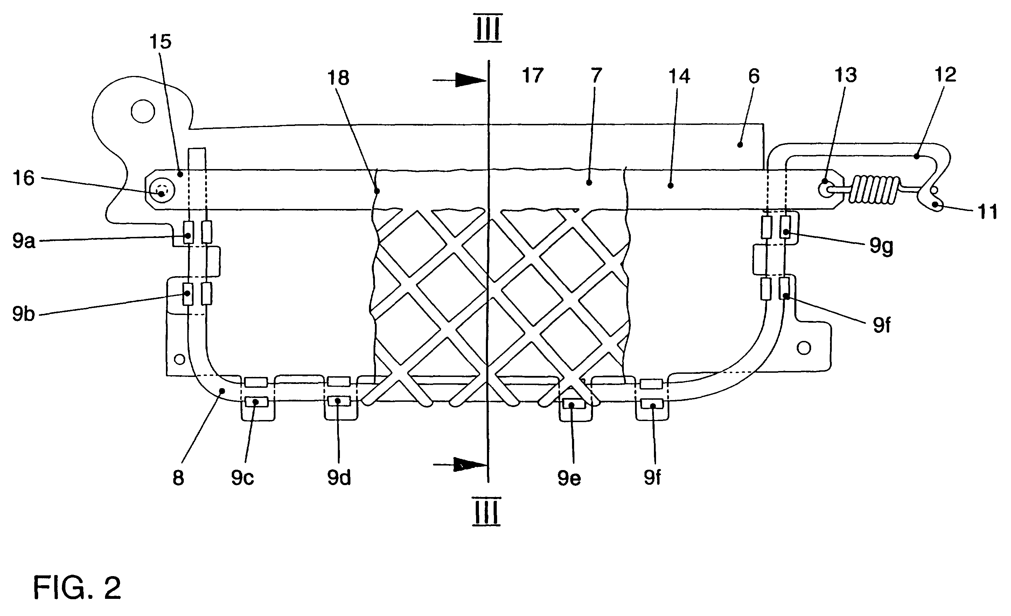

Ein Basiskörper im Sinne der Erfindung ist hier eine Fahrzeugkarosserie, von der in Figur 1 als Bestandteil eine A-Säule 1 gezeigt ist. An dieser ist als Deckel eine Fahrzeugtür 2 angelenkt, von der hier nur ein unterer Abschnitt sichtbar ist. An einem Türinnenblech 3 ist ein Innenverkleidungselement 4 über hier nicht weiter bezifferte Clipsverbindungen befestigbar. Ein Ablagefach 5 in dem Innenverkleidungselement 4 wird gebildet durch einen Muldenkörper 6 und ein Netz 7. Der detaillierte Aufbau des Ablagefachs 5 ist der Figur 2 entnehmbar.

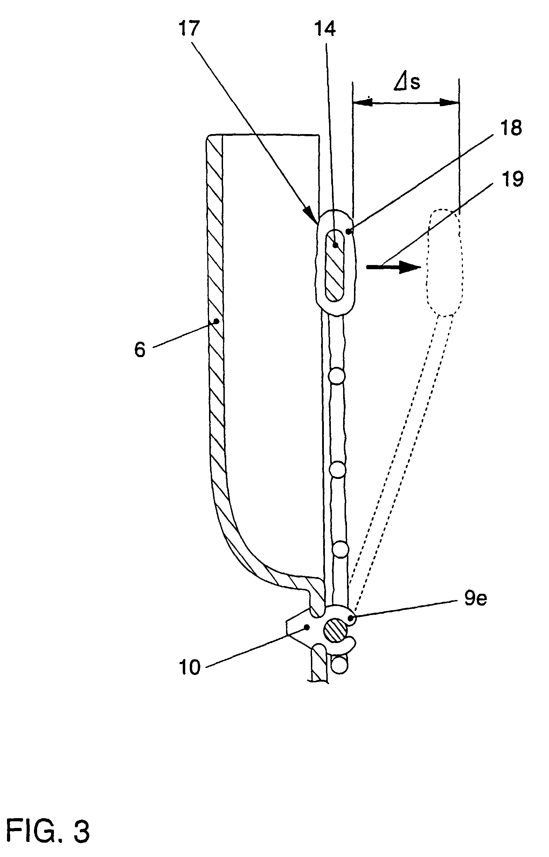

Der Muldenkörper 6 ist hier nach Art eines Modulträgers ausgebildet und nimmt einen Halterahmen 8 über Clipselemente 9a - 9h auf. Diese sind hier als gesonderte Bauelemente ausgeführt und einerseits in hier nicht weiter bezifferten Ausnehmungen des Muldenkörpers 6 mittels eines Fußteils 10 (siehe Figur 3) gehalten und übergreifen klammerartig den mit einem runden Querschnitt ausgeführten Halterahmen 8. Letzterer ist aus einem Rundstab gebogen und weist einen angeformten Haltebügelabschnitt 11 auf, in den ein Federelement 12 eingehängt ist. Dieses greift auch in eine Öffnung 13 eines biegeelastisch ausgeführten Bauelementes 14 ein und stellt somit eine Loslagerkonstruktion dar. Das Bauelement 14 ist stabförmig ausgeführt und weist hier einen flachbandartigen Querschnitt auf (siehe Figur 3). Mit seinem der Öffnung 13 gegenüberliegenden Ende 15 ist das Bauelement 14 an dem Muldenköper 6 mittels eines Festlagers 16 gehalten. Ein solches Festlager 16 kann beispielsweise durch eine Schraube oder einen Niet realisiert werden, die bzw. der das Bauelement 14 durchdringt und in dem Muldenkörper 6 befestigt ist. Das Bauelement 14 ist hier auf den Halterahmen 11 also praktisch aufgelegt und bildet so mit diesem zusammen eine Aufspannung nach Art eines Spannrahmens für das aus einem Textilgewebe gehaltene Netz 7. Dieses ist der Übersichtlichkeit halber in Figur 2 nur ausschnittsweise dargestellt. Im Bereich einer Netzoberkante 17 ist eine Lasche 18 vorgesehen, die von dem Bauelement 14 durchdrungen wird. Wie insbesondere aus Figur 3 ersichtlich ist, kann der Bereich der Netzoberkante 17 als Zuziehgriff genutzt werden. Die im Zusammenhang mit dem Haltebügelabschnitt 11 und dem Federelement 12 realisierte Loslagerkonstiuktion stellt sicher, daß bei Beaufschlagung des Bauelementes 14 mit Handkraft gemäß Pfeil 19 die maximale Auslenkung des Bauelementes 14 und damit die seitliche Ausdehnbarkeit des Ablagefaches 5 auf einen vorgebbaren Betrag Δ s beschränkt bleibt.

Bei der in Figur 2 gezeigten Konstruktion wird ein Teil der Zuziehkraft also sowohl für die Verformung des Bauelementes 14 als auch für die Längung des Federelementes 12 verwendet, bevor die verbleibende Restkraft für die Bewegung der Fahrzeugtür 2 zur Verfügung steht. Abweichend von dem in Figur 2 dargestellten Ausführungsbeispiel kann aber beispielsweise auch statt der Kombination aus einem Festlager und einem Loslager eine schwimmende Lagerung vorgesehen sein. So kann beispielsweise die Anlenkung des Bauelementes 14 an beiden Enden über Federelemente erfolgen, die dann entweder an dem Halterahmen 11 und/oder an der Innenverkleidung 4 und/oder an der Fahrzeugtür 2 selbst angelenkt sein können.

Anstelle der Clipskörper 9a bis 9h können auch am Muldenkörper 6 direkt angeformte Clipsnasen vorgesehen sein, so daß die in Figur 2 dargestellte Ablagefachanordnung mit noch weniger Einzelteilen realisierbar ist. Der Halterahmen 11 kann ein Bügel aus Metall oder Kunststoff sein. Als bevorzugter Werkstoff für das Bauelement 14 wird ein Federstahl der Qualität C 75 vorgeschlagen. Mit der in den Figuren gezeigten Konstruktionen können Zuziehkräfte von 500 N übertragen werden. Als bevorzugter Werkstoff für den Muldenkörper wird ein talkumverstärkter Polypropylen vorgeschlagen. In diesem Zusammenhang ist besonders zu erwähnen, daß der Halterahmen 11 den vorzugsweise aus Kunststoff gebildeten Muldenkörper 6 auch in sich stabilisiert, so daß für die gesamte Mulde mit relativ geringen Wandstärken eine hohe Formbeständigkeit gewährleistet werden kann.

Die gemäß den Figuren 2 und 3 ausgeführte Ablagefachanordnung 5 kann optisch hervorragend in das Innenverkleidungsteil 4 integriert werden. Aus diesem Grund wird beispielsweise eine Designfuge 20 vorgeschlagen, die in etwa bündig mit der Netzoberkante 17 verläuft und insbesondere auch die Stoßstelle zwischen dem Muldenkörper 6 und einer Vertiefung 21 in dem Innenverkleidungsteil 4 optisch neutralisiert.

## Patentansprüche

1. An einem Basiskörper (1) anlenkbarer Deckel (2) mit einem als Zuziehgriff nutzbaren Wandungsrand eines Ablagefaches (5), dadurch gekennzeichnet, daß der Wandungsrand als ein biegeelastisches und/oder längenveränderliches Bauelement (14) ausgeführt ist, wobei das Bauelement (14) an dem Deckel (2) oder an einem daran befestigten Verkleidungsteil (4) mittels einer Lagerkonstruktion gehalten ist, die zumindest für einen Teil des Bauelementes (14) eine wegbegrenzte Relativverschiebung gegenüber dem Deckel (2) bzw. dem Verkleidungsteil (4) zuläßt.

2. Deckel nach Anspruch 1, dadurch gekennzeichnet, daß das Bauelement (14) flachbandförmig ausgebildet ist.

3. Deckel nach Anspruch 1 oder 2, dadurch gekennzeichnet, daß das Bauelement (14) aus Federstahl hergestellt ist.

4. Deckel nach wenigstens einem der Ansprüche 1 bis 3, dadurch gekennzeichnet, daß das Bauelement (14) aus Kunststoff oder einem Kunststoff-Verbundwerkstoff hergestellt ist.

5. Deckel nach wenigstens einem der Ansprüche 1 bis 4, dadurch gekennzeichnet, daß das Ablagefach (5) durch eine von einem Netz (6) überspannte Mulde gebildet ist, die dem Deckel (2) oder dem Verkleidungselement (4) zugeordnet ist.

6. Deckel nach Anspruch 5, dadurch gekennzeichnet, daß zur Halterung des Netzes (7) ein Halterahmen (11) vorgesehen ist, der an dem Deckel (2) oder dem Verkleidungselement (4) befestigt oder befestigbar ist.

7. Deckel nach wenigstens einem der Ansprüche 1 bis 6, dadurch gekennzeichnet, daß das Bauelement (14) einenends an einem Festlager gehaltert ist und anderenends mit einer Loslagerkonstruktion verbunden ist.

8. Deckel nach Anspruch 6 oder 7, dadurch gekennzeichnet, daß das Netz (7) eine röhrenförmige Lasche (18) aufweist, die von dem Bauelement (14) durchdrungen ist.

9. Deckel nach wenigstens einem der Ansprüche 1 bis 8, dadurch gekennzeichnet, daß er als eine an einer Fahrzeugkarosserie (1) angelenkte Fahrzeugtür (2) ausgebildet ist.

10. Deckel nach Anspruch 9, dadurch gekennzeichnet, daß das Verkleidungselement eine Türinnenverkleidung (4) ist.

11. Ablagefachanordnung zum Einsatz in einen Deckel 2 gemäß wenigstens einem der Ansprüche 1 bis 10, gekennzeichnet durch die Kombination folgender Merkmale:
- die Wandungen des Ablagefaches (5) werden zum einen Teil durch einen im wesentlichen gestaltfesten Muldenkörper (6) und zum anderen Teil durch das Netz (7) gebildet,
- der das Netz tragende Halterahmen (11) ist mittelbar und/oder unmittelbar und dem Muldenkörper (6) befestigt oder bestigbar,
- der Muldenkörper (6) ist zur Befestigung an einem in dem Deckel (2) gehaltenen Verkleidungselement (4) hergerichtet.

12. Ablagefachanordnung nach Anspruch 11, dadurch gekennzeichnet, daß loslagerseitig der Halterahmen 8 einen Befestigungsbügel (11) aufweist, der zum Eingriff eines an dem Bauelement (14) gehaltenen Federelementes (12) hergerichtet ist.

13. Ablagefachanordnung nach Anspruch 11 oder 12, dadurch gekennzeichnet, daß festlagerseitig das Bauelement (14) mit dem Muldenkörper (6) verschraubt, verclipst oder vemietet ist.

14. Ablagefachanordnung nach Anspruch 11, dadurch gekennzeichnet, daß der Halterahmen (8) mit dem Muldenkörper (6) clipsverbunden ist.

15. Ablagefachanordnung nach Anspruch 14, dadurch gekennzeichnet, daß zur Verbindung des Halterahmens (8) mit dem Muldenkörper (6) Clipse (9a - 9h) vorgesehen sind, die den Halterahmen (8) klammerartig umgreifend in den Muldenkörper (6) lösbar eingesetzt sind.

16. Ablagefachanordnung nach Anspruch 14, dadurch gekennzeichnet, daß die Clipse materialeinheitlich an dem Muldenkörper (6) angeformt sind.

17. Zusammenbau aus einer Ablagefachanordnung gemäß wenigstens einem der Ansprüche 11 bis 18 und einem Verkleidungsteil (4), das in dem gemäß wenigstens einem der Ansprüche 1 bis 10 ausgeführten Deckel eingesetzt ist, dadurch gekennzeichnet, daß in dem Verkleidungsteil (4) eine muldenartige Vertiefung (21) vorgesehen ist, deren Randkontur an diejenige des Muldenkörpers (6) angepaßt ist.

18. Zusammenbau nach Anspruch 19, gekennzeichnet durch eine Designfuge (20), die zumindest an der oberen Sichtkante (17) des Netzes (7) orientiert ist und im Bereich des Ablagefaches (5) gemeinsam durch den Muldenkörper (6) und das Verkleidungselement (4) gebildet ist.
